# EUROPEAN PATENT APPLICATION

(11) **EP 4 635 791 A1**
(43) Date of publication of application: **22.10.2025**
(21) Application number: 23902256.9
(22) Date of filing: 10.10.2023
(51) Int. Cl.: B60L 58/26, H01M 10/6567, H01M 10/613, H01M 10/63, B60L 58/27, H01M 10/615, H01M 10/625, B60L 53/80

(54) **METHOD AND APPARATUS FOR CONTROLLING LIQUID LEVEL OF VEHICLE COOLING LIQUID, VEHICLE AND STORAGE MEDIUM**

(30) Priority: 13.12.2022 CN 202211594004
(71) Applicant: Nio Technology (Anhui) Co., Ltd, Hefei City, Anhui 230601 (CN)
(72) Inventor: SU, Xing, Hefei, Anhui 230601 (CN); GE, Zengfang, Hefei, Anhui 230601 (CN); JIANG, Limin, Hefei, Anhui 230601 (CN); ZHANG, Guohua, Hefei, Anhui 230601 (CN); WANG, Feng, Hefei, Anhui 230601 (CN)
(74) Representative: Vossius & Partner Patentanwälte Rechtsanwälte mbB
(86) International application number: PCT/CN2023/123686
(87) International publication number: WO 2024/125054

(57) **Abstract**

Disclosed are a method and apparatus for controlling the level of a vehicle coolant, a vehicle, and a storage medium. The method for controlling the level of a vehicle coolant includes the following steps: receiving a target temperature to which the vehicle coolant is to be regulated before a vehicle battery is swapped, wherein the target temperature is at least partially determined based on the temperature of an external coolant at a location where the battery is replaced, and the vehicle coolant is within an allowable level range at the target temperature (S102); determining an available regulation time available for regulating the temperature of the coolant before the vehicle battery is swapped (S104); and determining a temperature regulation plan for the vehicle coolant based on the current temperature, the target temperature and the available regulation time of the vehicle coolant (S106).

## Description

### TECHNICAL FIELD

The disclosure relates to the field of battery cooling, and specifically to a method for controlling the level of a vehicle coolant, a vehicle, and a storage medium.

### BACKGROUND ART

Nowadays, performing a battery swap at battery swap stations has become a popular method to maintain the range of electric vehicles. However, during the battery swap, there is a temperature difference between a coolant temperature of a battery pack on a vehicle and a coolant temperature of a battery pack in a battery swap station. Coolants have different densities at different temperatures, which may result in an alarm caused by a too high or too low level of the coolant in the vehicle after multiple battery swaps. In existing solutions, it is usually necessary to manually extract or add a coolant, which will undoubtedly increase the workload for after-sales maintenance and make it impossible to realize truly unattended battery swap.

In view of this, there is a need to propose a mechanism for controlling the level of a vehicle coolant.

### SUMMARY

Embodiments of the disclosure provide a method and apparatus for controlling the level of a vehicle coolant, a vehicle, and a storage medium, to control the level of the vehicle coolant to prevent the level of the coolant from becoming too high or too low due to temperature fluctuations.

According to an aspect of the disclosure, provided is a method for controlling the level of a vehicle coolant. The method includes the following steps: receiving a target temperature to which the vehicle coolant is to be regulated before a vehicle battery is swapped, wherein the target temperature is at least partially determined based on the temperature of an external coolant at a location where the battery is replaced, and the vehicle coolant is within an allowable level range at the target temperature; determining an available regulation time available for regulating the temperature of the vehicle coolant before the vehicle battery is swapped; and determining a temperature regulation plan for the vehicle coolant based on the current temperature, the target temperature and the available regulation time of the vehicle coolant.

In some embodiments of the disclosure, optionally, the target temperature is determined by the following steps: receiving a cumulative temperature difference of the vehicle battery, wherein the cumulative temperature difference is obtained by accumulating historical vehicle battery temperature differences before and after vehicle battery swap; determining the temperature of the external coolant as an initial target temperature of the vehicle coolant; and subtracting the cumulative temperature difference from the initial target temperature to obtain the target temperature.

In some embodiments of the disclosure, optionally, the available regulation time includes an expected time required for a vehicle to travel to a destination for swapping the vehicle battery.

In some embodiments of the disclosure, optionally, the expected time required for traveling to the destination is determined by a navigation system of the vehicle based on a travel distance and road conditions during the travel to the destination.

In some embodiments of the disclosure, optionally, determining a temperature regulation plan for the vehicle coolant based on the current temperature, the target temperature and the available regulation time of the vehicle coolant includes: determining an amount of energy required to regulate the vehicle coolant from the current temperature to the target temperature; and determining a time for regulating the temperature of the vehicle coolant within a range less than or equal to the available regulation time.

In some embodiments of the disclosure, optionally, the temperature regulation plan includes at least one of the following: switching the vehicle coolant to a mode of actively cooling the vehicle battery to lower the temperature of the vehicle coolant; and switching the vehicle coolant to a mode of actively heating the vehicle battery to raise the temperature of the vehicle coolant.

In some embodiments of the disclosure, optionally, the method further includes at least one of the following steps: stopping the regulation of the temperature of the vehicle coolant when it is determined that the swapping of the vehicle battery is canceled; stopping the regulation of the temperature of the vehicle coolant when it is determined that charging is performed by a charging gun; stopping the regulation of the temperature of the vehicle coolant when it is determined that the state of charge of the vehicle battery is below a threshold; and stopping the regulation of the temperature of the vehicle coolant when it is determined that the swapping of the vehicle battery is completed.

According to another aspect of the disclosure, provided is an apparatus for controlling the level of a vehicle coolant, the apparatus including: a memory configured to store instructions; and a processor configured to execute the instructions to perform any one of the methods described above.

According to still another aspect of the disclosure, provided is a vehicle, including any one of the apparatuses described above.

According to yet another aspect of the disclosure, provided is a computer-readable storage medium having stored therein instructions, wherein the instructions, when executed by a processor, cause the processor to perform any one of the methods described above.

The method and apparatus for controlling the level of a vehicle coolant, the vehicle, and the storage medium provided in some embodiments of the disclosure can be used to control the level of the vehicle coolant to prevent the coolant from being excessive or insufficient, thereby ensuring proper operation of a battery cooling system.

### BRIEF DESCRIPTION OF THE DRAWINGS

The above and other objectives and advantages of the disclosure will be more thorough and clearer from the following detailed description in conjunction with the accompanying drawings, in which the same or similar elements are denoted by the same reference numerals.
FIG. 1 shows a method for controlling the level of a vehicle coolant according to an embodiment of the disclosure;
FIG. 2 shows a vehicle according to an embodiment of the disclosure;
FIG. 3 shows a vehicle according to an embodiment of the disclosure;
FIG. 4 shows a partial schematic view of a reservoir for storing a vehicle coolant according to an embodiment of the disclosure; and
FIG. 5 shows the variation of the level of a coolant according to an embodiment of the disclosure.

### DETAILED DESCRIPTION OF EMBODIMENTS

For brevity and illustrative purposes, the principles of the disclosure are mainly described with reference to its exemplary embodiments. However, those skilled in the art can easily appreciate that the same principle can be equivalently applied to all types of methods and apparatuses for controlling the level of a vehicle coolant, vehicles, and storage media, in which these same or similar principles can be implemented, where any such changes do not depart from the true spirit and scope of the disclosure.

There is some coolant in a battery pack of a vehicle, which is in communication with a coolant in a vehicle coolant reservoir, together forming a cooling circulation system of the vehicle. The coolant in the cooling circulation system of the vehicle is referred to as a vehicle coolant in the context of the disclosure, to distinguish from an external coolant mentioned hereinafter. For simplicity, unless otherwise specified, the term "coolant" used hereinafter will refer to the vehicle coolant, unless it can be determined from the context that the coolant refers to the external coolant.

If the vehicle is replenished with energy by swapping the battery pack, the temperature of a coolant in a newly swapped battery pack is consistent with the temperature of a coolant (also referred to as the external coolant in this disclosure) at the storage location thereof (e.g., a battery swap station). Since the volume of the coolant inside the battery pack is fixed, if there is a significant temperature difference between the coolants inside the battery packs before and after the swapping of the battery packs, there will be a large difference in the mass of the coolant supplemented by a replacing battery pack and the mass of the coolant removed by the replaced vehicle-side battery pack. Therefore, when the temperature of the coolant inside the replacing battery pack is consistent with the temperature of a coolant in an entire vehicle-side coolant loop, this will cause a change in the level of the entire vehicle-side coolant loop.

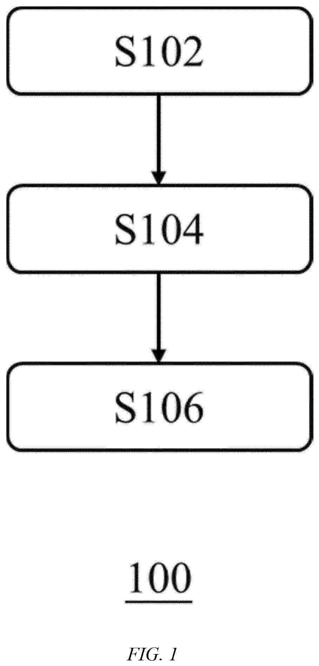

An aspect of the disclosure provides a method for controlling the level of a vehicle coolant. As shown in FIG. 1, the method 100 for controlling the level of a vehicle coolant (hereinafter referred to as method 100) includes the following steps: step S102, receiving a target temperature to which the vehicle coolant (hereinafter referred to as coolant) is to be regulated before a vehicle battery is swapped; step S104, determining an available regulation time available for regulating the temperature of the coolant before the vehicle battery is swapped; and step S106, determining a temperature regulation plan for the coolant based on the current temperature, the target temperature and the available regulation time of the coolant. The method 100 may be performed by a vehicle side, and specifically, may be executed by a vehicle-side processor (including a cockpit domain controller, a vehicle control unit, etc.) and supporting modules thereof. Through the above steps of the method 100, the temperature of the vehicle coolant can be actively regulated before the battery swap, thereby adjusting the temperature of the coolant in the replaced battery pack, and further adjusting the mass of the coolant in the replaced battery pack to actively achieve the effect of discharging or supplementing the vehicle coolant. In this way, the level of the vehicle coolant can be controlled, thereby preventing an alarm caused by a too high or too low level after the battery pack is swapped.

In step S102 of the method 100, the target temperature to which the coolant is to be regulated before the vehicle battery is swapped is received. The target temperature may be at least partially determined based on the temperature of an external coolant at a vehicle battery available for swapping. Moreover, the coolant is within an allowable level range at the target temperature, thereby achieving control of the level of the coolant.

In a battery swap station, the vehicle battery (e.g., in a charging state or a fully charged state without being charged) is also assigned a system that controls the battery temperature by means of a coolant. Generally, the temperature of the coolant in the battery swap station is kept constant, so the temperature of the vehicle battery available for swapping in the battery swap station is also constant. In some examples, the constant temperature of the coolant in the battery swap station (i.e., the constant temperature of the vehicle battery in the battery swap station) can be used as the target temperature, such that the temperature of the vehicle coolant is adjusted to the target temperature before the battery is swapped. In this way, an excessive difference between the mass of a newly swapped battery and the mass of an original battery can be prevented, thereby preventing the level of the coolant from exceeding the allowable level range due to excessive expansion or contraction of the level of the reservoir for storing the coolant after a vehicle coolant system re-establishes thermal equilibrium.

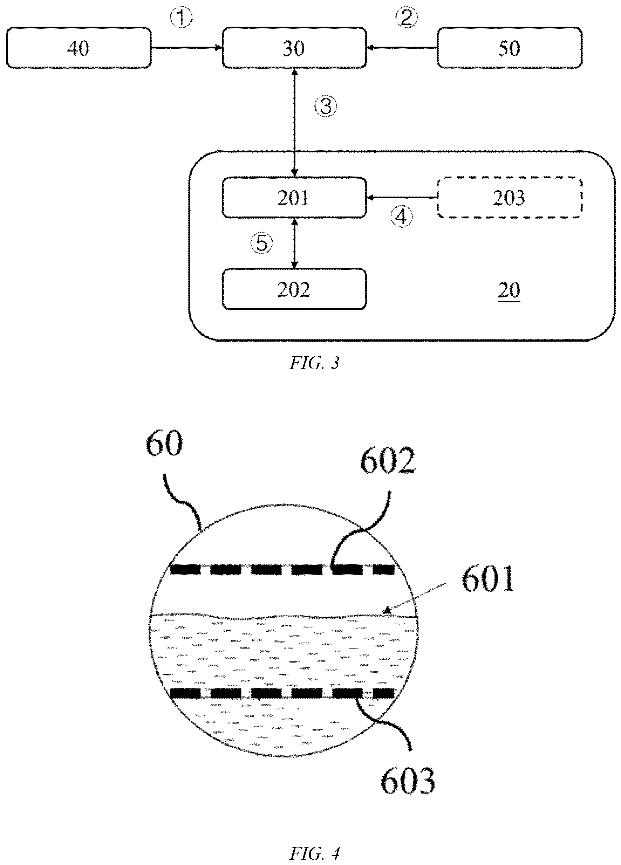

FIG. 4 shows a partial schematic view of the reservoir for storing the vehicle coolant according to an embodiment of the disclosure. The figure shows a current level (surface height) 601 of the coolant in the reservoir 60, and also indicates, with dashed lines, an allowable highest level 602 and an allowable lowest level 603. When the current level 601 is between the allowable highest level 602 and the allowable lowest level 603, no alarm operation is triggered. When the level of the coolant exceeds a range defined by the highest level 602 and the lowest level 603, a cooling system of the vehicle may sound an alarm to remind a user to extract or add the coolant. In some examples, the total amount of the coolant within the reservoir 60 may be configured according to the following conditions. When the temperature of the coolant is below the constant temperature of the coolant within the battery swap station, the level is approximately at an intermediate level between the allowable highest level 602 and the allowable lowest level 603. In this way, the coolant will have an equal amount of upward or downward level variation, and therefore the tolerance for the temperature change is also high.

Referring back to FIG. 1, in step S104 of the method 100, the available regulation time available for regulating the temperature of the coolant before the vehicle battery is swapped is determined. In some embodiments of the disclosure, the available regulation time includes an expected time required for the vehicle to travel to a destination for swapping the vehicle battery. In some examples, the expected time required for traveling to the destination is determined by a navigation system of the vehicle based on a travel distance and road conditions during the travel to the destination. During the available regulation time, the vehicle can perform operations to control the temperature of the coolant, ensuring that the coolant inside the vehicle reaches a preset temperature before arriving at the battery swap station.

In step S106 of the method 100, a temperature regulation plan for the coolant is determined based on the current temperature, the target temperature and the available regulation time of the coolant. Specifically, in some embodiments of the disclosure, in step S106, determining a temperature regulation plan for the coolant based on the current temperature, the target temperature and the available regulation time may specifically include the following steps: (1) determining an amount of energy required to regulate the coolant from the current temperature to the target temperature; and (2) determining a time for regulating the temperature of the coolant within a time range less than or equal to the available regulation time. Thus, the energy required to perform temperature control and the time for releasing the energy to pre-cool or pre-heat the coolant both have been determined. The vehicle can release battery energy in the most cost-effective way possible to pre-cool or pre-heat the coolant during this time.

As mentioned briefly above, in some examples, the temperature regulation plan may include switching the coolant to a mode of actively cooling the vehicle battery to lower the temperature of the coolant (or to pre-cool the coolant); and switching the coolant to a mode of actively heating the vehicle battery to raise the temperature of the coolant (or to pre-heat the coolant).

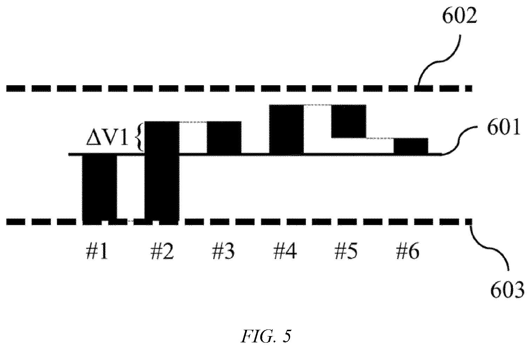

However, in some examples, an actual heat exchange process may not always be ideal, and directly using the constant temperature of the coolant in the battery swap station as the target temperature may lead to errors in practical situations, or even result in an accumulation of errors after multiple battery swaps. FIG. 5 shows the variation of the level of the coolant according to an embodiment of the disclosure. After each battery swap (six battery swaps are shown in the figure), there is always a difference in the level of the coolant before and after the battery swap. As will be understood, the variation of the level is caused by temperature variations. That is, although the target temperature is set before each battery swap, the practical situations may deviate from theoretical predictions. Therefore, after the coolant in the swapped battery and the coolant in the vehicle reaches thermal equilibrium, the actual temperatures of the two are equal to the target temperature. For this reason, this error needs to be taken into account in subsequent processes.

For example, in step S102, the target temperature may be determined through the following steps to reduce the accumulated errors caused by the mismatch between theory and reality. First, a cumulative temperature difference of the vehicle battery is received. Since the temperature of the vehicle battery is equivalent to the temperature of the coolant inside the vehicle battery, it can also be used to characterize a floating volume of the coolant. The cumulative temperature difference is obtained by accumulating historical vehicle battery temperature differences before and after vehicle battery swap. This process can be processed by a cloud server and the like, and can be retrieved from the server before each battery swap. Second, the temperature of the external coolant available at the vehicle battery available for swapping is determined as the initial target temperature of the coolant. Finally, the cumulative temperature difference is subtracted from the initial target temperature to obtain the target temperature.

Still referring to FIG. 5, the difference ΔV1 between two levels after the first battery swap is shown. Accordingly, the level difference is caused by a temperature difference ΔT1. The process of determining ΔT1 from ΔV1 is omitted here, as it belongs to general physical knowledge. Similarly, level differences ΔV2, ..., ΔVN and corresponding temperature differences ΔT2, ..., ΔTN thereof can be determined for the second, ..., N-th battery swaps, respectively. Subsequently, ΔT1, ..., ΔTN can be accumulated, and such an accumulated value is an accumulated error, the influence of which can be considered to be eliminated when determining the target temperature. Specifically, it is possible to substrate the cumulative temperature difference from the initial target temperature to obtain the target temperature. It should be understood that the cumulative temperature difference may be negative. If excessive coolant accumulates on the vehicle side, the temperature of the coolant loop needs be regulated to be lower than the temperature of the external coolant, so that the mass of the replaced coolant is greater than that of the supplemented coolant, so that the accumulated error can be eliminated, and vice versa.

In some embodiments of the disclosure, the method 100 further includes (not shown): stopping the regulation of the temperature of the coolant when it is determined that the swapping of the vehicle battery is canceled. If the vehicle no longer sends a pre-cooling/pre-heating request signal regarding the coolant (for example, a user cancels a battery swap order), the method 100 further includes the step of exiting the pre-cooling and pre-heating, thereby reducing unnecessary energy consumption (as both the pre-cooling and pre-heating need to consume energy from the battery or other sources) in a timely manner.

In some embodiments of the disclosure, the method 100 further includes (not shown): stopping the regulation of the temperature of the coolant when it is determined that charging is performed by a charging gun. In this case, it indicates that the user has selected another way to replenish the vehicle with energy, so that the pre-cooling and pre-heating of the coolant can be stopped, and unnecessary energy consumption is reduced in a timely manner.

In some embodiments of the disclosure, the method 100 further includes (not shown): stopping the regulation of the temperature of the coolant when it is determined that the state of charge of the vehicle battery is below a threshold. When the state of charge of the battery is too low, using the battery to pre-cooling/pre-heating the coolant will consume a large amount of energy, thereby affecting the range of the vehicle. For this reason, the coolant can no longer be pre-cooled/pre-heated when the state of charge of the battery is low.

In some embodiments of the disclosure, the method 100 further includes (not shown): stopping the regulation of the temperature of the coolant when it is determined that the swapping of the vehicle battery is completed. After the user removes the replaced battery from the vehicle and installs the replacing battery, a designated pre-cooling/pre-heating scheme can be stopped regardless of whether it has been fully executed. This is because after the replacing battery is newly installed, the coolant inside the battery will also be in communication with and exchanges heat with the coolant in the vehicle. In this case, pre-cooling/pre-heating of the coolant becomes meaningless.

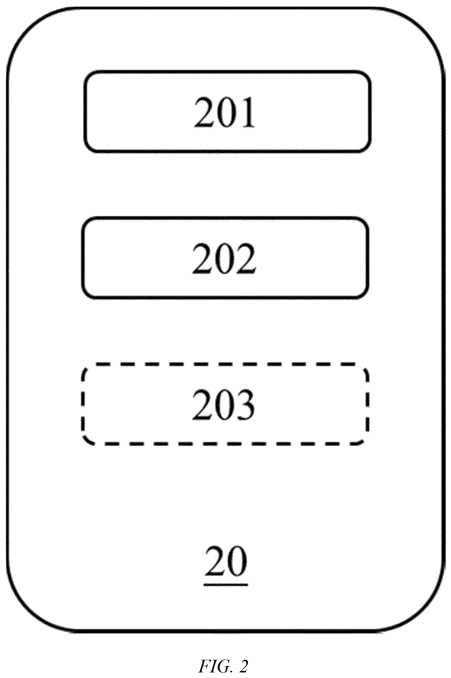

Another aspect of the disclosure provides a vehicle. As shown in FIG. 2, the vehicle 20 includes a cockpit domain controller 201, a vehicle control unit 202 and an optional navigation system 203. The vehicle 20 can control the level of a coolant of the vehicle 20, thereby preventing an alarm caused by a too high or too low level. The operation process of the cockpit domain controller 201, the vehicle control unit 202 and the navigation system 203 of the vehicle 20 can be carried out with reference to the specific steps of the method 100 described above, and the related content is also incorporated herein by reference, which is not repeated herein for brevity.

The cockpit domain controller 201 is configured to perform the following operations: receiving a target temperature to which the coolant is to be regulated before the vehicle battery is swapped, where the target temperature is at least partially determined based on the temperature of an external coolant available at a vehicle battery available for swapping, and the coolant is within an allowable level range at the target temperature; and determining an available regulation time available for regulating the temperature of the coolant before the vehicle battery is swapped. The vehicle control unit 202 is configured to determine a temperature regulation plan for the coolant based on the current temperature, the target temperature and the available regulation time.

In some embodiments of the disclosure, the cockpit domain controller 201 is configured to: receive a cumulative temperature difference of the vehicle battery, where the cumulative temperature difference is obtained by accumulating historical vehicle battery temperature differences before and after vehicle battery swap; determine the temperature of the external coolant available at the vehicle battery available for swapping as the initial target temperature of the coolant; and subtract the cumulative temperature difference from the initial target temperature to obtain the target temperature.

In some embodiments of the disclosure, the available regulation time includes an expected time required for the vehicle 20 to travel to a destination for swapping the vehicle battery.

In some embodiments of the disclosure, the vehicle 20 further includes a navigation system 203. The navigation system 203 is configured to determine an expected time required to travel to the destination based on a travel distance and road conditions during the travel to the destination.

In some embodiments of the disclosure, the vehicle control unit 202 is configured to: determine an amount of energy required to regulate the coolant from the current temperature to the target temperature; and determine a time for regulating the temperature of the coolant within a time range less than or equal to the available regulation time.

In some embodiments of the disclosure, the temperature regulation plan includes at least one of the following: switching the coolant to a mode of actively cooling the vehicle battery to lower the temperature of the coolant; and switching the coolant to a mode of actively heating the vehicle battery to raise the temperature of the coolant.

In some embodiments of the disclosure, the vehicle control unit 202 is further configured to stop the regulation of the temperature of the coolant when it is determined that the swapping of the vehicle battery is canceled.

In some embodiments of the disclosure, the vehicle control unit 202 is further configured to stop the regulation of the temperature of the coolant when it is determined that charging is performed by a charging gun.

In some embodiments of the disclosure, the vehicle control unit 202 is further configured to stop the regulation of the temperature of the coolant when it is determined that the state of charge of the vehicle battery is below a threshold.

In some embodiments of the disclosure, the vehicle control unit 202 is further configured to stop the regulation of the temperature of the coolant when it is determined that the swapping of the vehicle battery is completed.

Referring to FIG. 3, to further describe the operating principle of the vehicle 20, FIG. 3 further shows a user-side application 40, a cloud server 30 and a battery swap station 50 that cooperate with the vehicle 20. Several processes are further shown in the figure, with the process numbers marked in circles.

Process ①: The cloud server 30 receives a battery swap request from the user-side application 40. The cloud server 30 accumulates the temperature difference between coolants in battery packs before and after each battery swap, and the temperature difference is taken into account to determine the target temperature in the battery swap request.

Process ②: The battery swap station 50 interacts with the cloud server 30 to upload coolant temperature information of the battery pack at the battery swap station 50 to the cloud server.

Process ③: The cockpit domain controller (CDC) 201 of the vehicle 20 uploads an onboard battery pack temperature and other information uploaded from the vehicle control unit (VCU) 202 to the cloud server 30; and the cloud server 30 calculates the target temperature for the current battery swap based on the temperature of the battery pack at the battery swap station 50 and the temperature of the battery pack on the vehicle, and sends the target temperature and a battery swap request signal to the cockpit domain controller 201.

Process ④: The cockpit domain controller 201 receives GPS navigation information and determines approximately how long it will take to reach the battery swap station.

Process ⑤: The vehicle control unit 202 uploads the temperature of the battery pack of the vehicle 20 and a logic of exiting pre-cooling/pre-heating due to special reasons to the cockpit domain controller 201; and the cockpit domain controller 201 calculates an approximate final battery swap time based on a battery swap order time from the cloud server and the time required for navigation, and sends the approximate final battery swap time to the vehicle control unit 202, and the cockpit domain controller 201 also sends a pre-cooling/pre-heating request signal and the target temperature to the vehicle control unit 202.

In the subsequent processes (not further shown), the vehicle control unit 202, upon receiving the pre-cooling/pre-heating request, the target temperature and the battery swap time from the cockpit domain controller 201, determines a difference between the current battery temperature and the target temperature to obtain the time for starting pre-cooling/pre-heating, thereby reaching the target temperature as far as possible while saving energy.

If the difference between the onboard battery temperature and the target temperature indicates that pre-cooling is needed, a water circuit of the vehicle is switched to the mode of actively cooling the battery; If the difference between the onboard battery temperature and the target temperature indicates that pre-heating is needed, a water circuit of the vehicle is switched to the mode of actively heating the battery; if the cockpit domain controller 201 no longer sends a pre-cooling/pre-heating request signal (order canceled), the pre-cooling/pre-heating operation is terminated; if the vehicle control unit 202 identifies that the vehicle has been charged by a charging gun, the pre-cooling/pre-heating operation is terminated, and the reason for termination is fed back to the cockpit domain controller 201, so that the cockpit domain controller 201 stops sending the pre-cooling/pre-heating request signal; if the vehicle control unit 202 identifies that the state of charge (SOC) of the vehicle battery is too low, the pre-cooling/pre-heating operation is terminated, and the reason for termination is fed back to the cockpit domain controller 201, so that the cockpit domain controller 201 stops sending the pre-cooling/pre-heating request signal; and if the battery swap is completed, the cockpit domain controller 201 stops sending the pre-cooling/pre-heating request, and the pre-cooling/pre-heating operation is terminated.

Still another aspect of the disclosure provides an apparatus for controlling the level of a vehicle coolant, the apparatus including: a memory configured to store instructions; and a processor configured to execute the instructions to perform any one of the methods described above.

Yet another aspect of the disclosure provides a vehicle, including any one of the apparatuses for controlling the level of a vehicle coolant described above. The vehicle here may have an architecture as described above with respect to the vehicle 20 and includes separate processing units and execution units such as the cockpit domain controller 201, the vehicle control unit 202 and the navigation system 203.

According to a further aspect of the disclosure, there is provided a computer-readable storage medium having instructions stored therein, where the instructions, when executed by a processor, cause the processor to perform any one of the methods for controlling the level of a vehicle coolant described above. The computer-readable medium in the disclosure includes various types of computer storage media, and may be any usable medium accessible to a general-purpose or special-purpose computer. By way of example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can be used to carry or store desired program code means in the form of instructions or data structures and that can be accessed by a general-purpose or special-purpose computer, or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete components in a user terminal.

Control strategies proposed in some of the above embodiments of the disclosure can ensure that, even after multiple battery swaps, the level of the coolant in the vehicle and the level of the coolant in the battery swap station remain within a safe range without the need for manual intervention. This can not only enhance the user's driving experience but can also facilitate unattended battery swap. The foregoing descriptions are merely the implementations of the disclosure, but are not intended to limit the scope of protection of the disclosure. Any feasible variation or replacement conceived by those skilled in the art within the technical scope disclosed in the disclosure shall fall within the scope of protection of the disclosure. Without conflicts, the implementations of the disclosure and features in the implementations may also be combined with each other. The scope of protection of the disclosure shall be subject to recitations of the claims.

## Claims

1. A method for controlling the level of a vehicle coolant, the method comprising:
receiving a target temperature to which the vehicle coolant is to be regulated before a vehicle battery is swapped, wherein the target temperature is at least partially determined based on the temperature of an external coolant at a location where the battery is replaced, and the vehicle coolant is within an allowable level range at the target temperature;
determining an available regulation time available for regulating the temperature of the vehicle coolant before the vehicle battery is swapped; and
determining a temperature regulation plan for the vehicle coolant based on the current temperature, the target temperature and the available regulation time of the vehicle coolant.

2. The method according to claim 1, wherein the target temperature is determined by the following steps:
receiving a cumulative temperature difference of the vehicle battery, wherein the cumulative temperature difference is obtained by accumulating historical vehicle battery temperature differences before and after vehicle battery swap;
determining the temperature of the external coolant as an initial target temperature of the vehicle coolant; and
subtracting the cumulative temperature difference from the initial target temperature to obtain the target temperature.

3. The method according to claim 1, wherein the available regulation time comprises an expected time required for a vehicle to travel to a destination for swapping the vehicle battery.

4. The method according to claim 3, wherein the expected time required for traveling to the destination is determined by a navigation system of the vehicle based on a travel distance and road conditions during the travel to the destination.

5. The method according to claim 1, wherein determining a temperature regulation plan for the vehicle coolant based on the current temperature, the target temperature and the available regulation time of the vehicle coolant comprises:
determining an amount of energy required to regulate the vehicle coolant from the current temperature to the target temperature; and
determining a time for regulating the temperature of the vehicle coolant within a range less than or equal to the available regulation time.

6. The method according to claim 1, wherein the temperature regulation plan comprises at least one of the following:
switching the vehicle coolant to a mode of actively cooling the vehicle battery to lower the temperature of the vehicle coolant; and
switching the vehicle coolant to a mode of actively heating the vehicle battery to raise the temperature of the vehicle coolant.

7. The method according to claim 1, further comprising at least one of the following steps:
stopping the regulation of the temperature of the vehicle coolant when it is determined that the swapping of the vehicle battery is canceled;
stopping the regulation of the temperature of the vehicle coolant when it is determined that charging is performed by a charging gun;
stopping the regulation of the temperature of the vehicle coolant when it is determined that the state of charge of the vehicle battery is below a threshold; and
stopping the regulation of the temperature of the vehicle coolant when it is determined that the swapping of the vehicle battery is completed.

8. An apparatus for controlling the level of a vehicle coolant, the apparatus comprising:
a memory configured to store instructions; and
a processor configured to execute the instructions to perform the method according to any one of claims 1 to 7.

9. A vehicle, comprising the apparatus according to claim 8.

10. A computer-readable storage medium having stored therein instructions, wherein the instructions, when executed by a processor, cause the processor to perform the method according to any one of claims 1 to 7.
